# EUROPEAN PATENT APPLICATION

(11) **EP 1 536 237 A2**
(43) Date of publication of application: **01.06.2005**
(21) Application number: 04027525.7
(22) Date of filing: 19.11.2004
(51) Int. Cl.: G01N 35/02

(54) **Automatic analyzer**

(30) Priority: 25.11.2003 JP 2003393231
(71) Applicant: Hitachi High-Technologies Corporation, Tokyo 105-8717 (JP); Hitachi Science Systems, Ltd., Ibaraki 312-0033 (JP)
(72) Inventor: Takahashi, Katsuaki, Hitachinaka-shi Ibaraki 312-0033 (JP); Nishida, Masaharu Hitachi High-Tech Corporation, Hitachinaka-shi Ibaraki 312-8504 (JP)
(74) Representative: Strehl Schübel-Hopf & Partner

(57) **Abstract**

An automatic analyzer which can perform automatic re-measurement, can release a sample for transfer to another unit, can easily perform pre-dilution of the sample, and is adaptable for a reduction in amount of the sample. The automatic analyzer comprises a reaction disk holding a plurality of reaction cells arranged in a row along the circumference of the reaction disk, and a sample dispensing mechanism for dispensing samples into the reaction cells on the reaction disk. The sample dispensing mechanism comprises a dispensing nozzle for dispensing the samples and a support mechanism for supporting the dispensing nozzle, and the support mechanism is disposed inside the circumference of the reaction disk along which the reaction cells are arranged in a row.

## Description

### BACKGROUND OF THE INVENTION

### 1. Field of the Invention

The present invention relates to an automatic analyzer for performing quantitative or qualitative analysis of components of biological samples, such as blood or urine, and more particularly to an automatic analyzer with a sample diluting function.

### 2. Description of the Related Art

In an automatic analyzer, if an alarm is issued on data because of any abnormality in measurement, the measurement must be performed again automatically. Although the re-measurement is required in many situations, the reason of requiring the re-measurement in most cases is that the concentration of a sample exceeds the measurable range. In that case, it is effective to perform the measurement again after diluting the sample to such an extent that the concentration is within the measurable range. As related art capable of facilitating the re-measurement, Patent Reference 1; JP,A 2000-146987 discloses a method of stocking a part of a sample in another reaction cell beforehand.

Further, there has recently been a strong demand for realizing even smaller amounts of reagents for the purpose of cutting the running cost. The reduced amounts of reagents necessarily require an even smaller amount of sample to be dispensed. One known method for reducing the amount of dispensed sample is to relatively reduce the sample amount by pre-diluting the sample in a reaction cell, and is disclosed in Patent Reference 2; JP,B 4-7956. The technique disclosed in Patent Reference 1 is effective only in the case of re-measurement and is not adaptable for reducing the sample amount. On the other hand, the technique disclosed in Patent Reference 2 is effective only in the case of reducing the sample amount with pre-dilution of the sample and is not easily adaptable for re-measurement.

### SUMMARY OF THE INVENTION

In a known automatic analyzer in which a plurality of reaction cells are arranged in a row along the circumference of a reaction disk, when a sample in the reaction cell is diluted on the reaction disk, a sampling probe is employed to add a diluent and to suck the diluted sample for ejection into another empty reaction cell. The sampling probe is installed near an outer periphery of the reaction disk and is able to access reaction cells only in particular positions on the reaction disk (for sucking and ejecting samples). In such an automatic analyzer, the reaction disk must be rotated such that a sample to be measured again comes to the position accessible by the sampling probe. However, because samples in other reaction cells on the reaction disk are also under analysis, the reaction disk cannot be rotated for only the sample to be measured again. It has been hence difficult to take a quick action for the re-measurement.

With the view of overcoming the above-mentioned problems in the related art, an object of the present invention is to provide an automatic analyzer which can quickly release a sample for transfer to another unit and can simply measure the sample again without using a bulky and intricate mechanism for transferring a sample-cup holding rack to perform automatic re-measurement.

To achieve the above object, the present invention is constituted as follows.

According to one aspect, an automatic analyzer of the present invention comprises a reaction disk holding a plurality of reaction cells arranged in a row along the circumference of the reaction disk; and a sample dispensing mechanism for dispensing samples into the reaction cells on the reaction disk, wherein the sample dispensing mechanism comprises a dispensing nozzle for dispensing the samples, and a support mechanism for supporting the dispensing nozzle, and the support mechanism is disposed inside the circumference of the reaction disk along which the reaction cells are arranged in a row. According to another aspect, the automatic analyzer of the present invention further comprises a reagent dispensing mechanism for dispensing reagents into the reaction cells on the reaction disk, and an analyzing mechanism for analyzing reactions occurred in the reaction cells on the reaction disk.

In actual operation, based on an assumption that re-measurement is always required, when a sample is dispensed into a reaction cell, a part of the sample in an undiluted state is dispensed into another reaction cell for the re-measurement beforehand at the end of operation for dispensing that sample. Alternatively, a part of the sample may be stocked in a diluted state by dispensing the sample into another reaction cell and adding a diluent to the other reaction cell by the reagent dispensing mechanism. Further, a part of the sample may be stocked in both the undiluted state and the diluted state. In this case, two reaction cells are used to stock the sample.

A mechanism for moving the dispensing nozzle (sampling probe) is constructed to be able to suck the sample in the reaction cell at any of positions where the reaction cells are stopped. For example, when primary analysis is completed and analysis results show the necessity of re-measurement, the re-measurement is performed through the steps of dispensing the sample again from the reaction cell, in which the sample has been stocked beforehand as mentioned above, into another reaction cell, adding a reagent to the dispensed sample in the other reaction cell, stirring a mixture, and measuring the absorbance of the sample.

According to the present invention, since the sample can be sucked from the sample stocking reaction cell at any position, i.e., regardless of the position where it is located, the re-measurement can be started as soon as an alarm is issued. Also, to be adapted for a reduction in sample amount, the sample can be dispensed many times from one reaction cell that stocks the diluted sample. Therefore, the diluted sample can be dispensed for various analysis items in primary analysis, and a relative reduction in sample amount can be realized.

Furthermore, since the sample can be released for transfer immediately after the sample has been dispensed, a complicated transfer mechanism for returning a sample-cup holding rack is no longer required.

### BRIEF DESCRIPTION OF THE DRAWINGS

Fig. 1 shows a construction of an automatic analyzer according to an embodiment of the present invention; and
Fig. 2 shows one example of dispensing of reaction liquids into reaction cells in the embodiment of the present invention; and
Fig. 3 shows a general construction of a known automatic analyzer.

### DESCRIPTION OF THE PREFERRED EMBODIMENTS

A reaction cell usually employed for analysis is employed for stocking an undiluted or diluted sample. In other words, a sample is separately dispensed in at least one reaction cell as it is or after being diluted. A sampling probe is arranged to be movable along such a locus as enabling the probe to suck the sample from any of plural positions where the reaction cell containing the separately dispensed undiluted or diluted sample is stopped. Therefore, re-measurement can be performed at any time, as the occasion requires, by sucking the undiluted or diluted sample with the sampling probe to be dispensed into a new reaction cell, and adding a reagent to the dispensed sample. The number of reaction cells required for stocking the sample is just one or two, and hence unnecessary use of the reaction cells can be avoided. For some analysis items, the result of primary analysis is obtained before the measurement reaches a maximum reaction time (about 10 minutes). Also, for some samples, a reaction abruptly progresses because of an excessively high sample concentration in a certain analysis item, and an alarm indicating the necessity of re-measurement is issued in a short time (about 1 minute). However, since the sampling probe is able to suck the sample from any position, i.e., regardless of where the reaction cell stocking the relevant sample is positioned, the re-measurement can be started as soon as the alarm is issued. Further, looking from the viewpoint of reducing a sample amount, the sample can be dispensed many times from one reaction cell stocking the diluted sample, and therefore the diluted sample can be dispensed for various analysis items in the primary analysis. Thus, a relative reduction in sample amount can be realized.

With those features, the sample can be released for transfer immediately after the sample has been dispensed, and a complicated transfer mechanism for returning a sample-cup holding rack is no longer required.

One embodiment of the present invention will be described below with reference to the drawings.

### [Embodiment]

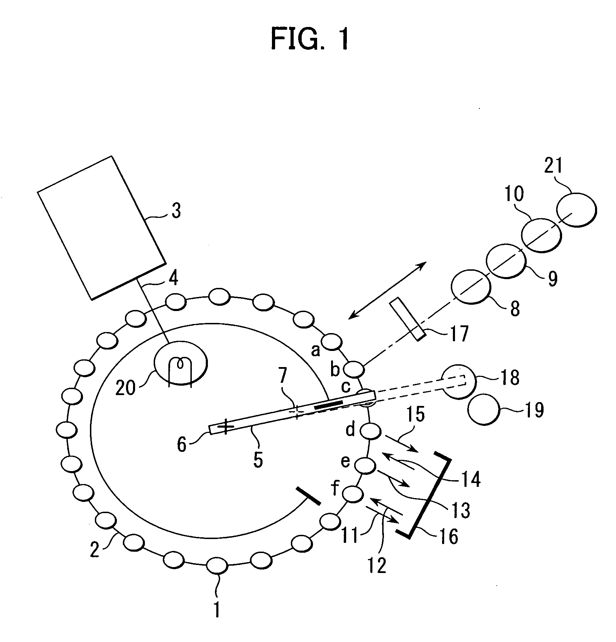

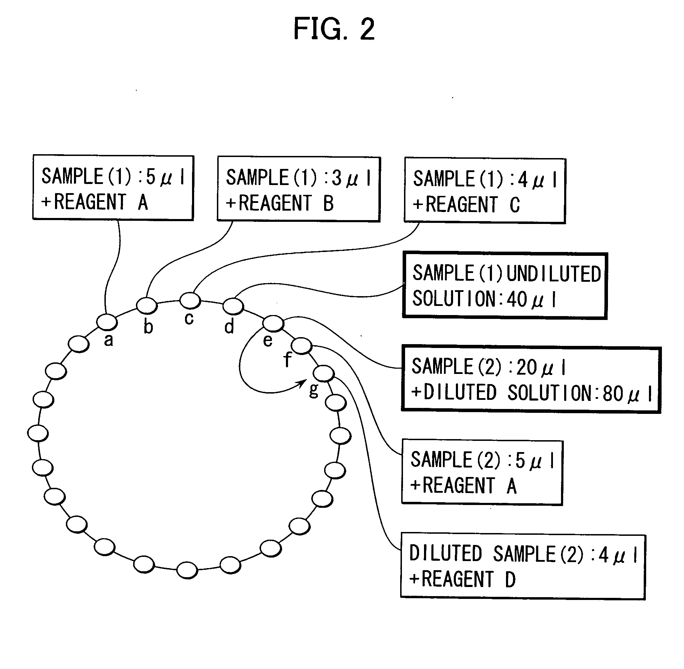

Fig. 1 schematically shows an automatic analyzer according to an embodiment of the present invention. In this embodiment, the present invention is applied to an automatic analyzer in which reaction cells 1 are arranged on a reaction disk 2 along the circumference thereof and are subjected to measurement by repeating steps of rotating the reaction disk 2 through one turn and an angular distance corresponding to one reaction cell (i.e., an angular interval between two adjacent reaction cells) and stopping it. Fig. 2 shows one example of dispensing of reaction liquids into the reaction cells in such an automatic analyzer.

A sampling-probe moving mechanism has a sampling arm 5, and a rotation center position 6 of the arm 5 is located exactly at or near the center of the reaction disk 2. The arm rotation center position 6 is also radially movable to a shift position 7. With such an arrangement, a sampling probe (not shown) is driven with three-axis driving, i.e., a vertical movement of the probe, an arm rotation, and a horizontal shift of the arm rotation center. Therefore, the sampling probe is able to suck and dispense the reaction liquid from any position where the reaction cell is stopped.

At the moment when the reaction cell 1 intersects an optical axis 4 of a lamp 20 for a photometer 3, the absorbance of the reaction liquid in the reaction cell 1 is measured in a photometric manner. It is assumed here that items to be requested for analysis of a sample (1) are three, i.e., A, B and C.

The arm rotation center position 6 is shifted to the shift position 7 with the sampling probe mounted to a fore end of the sampling arm 5, and the sampling probe is moved downward and inserted in a sample cup 18 in which the sample (1) is contained. After sucking 5 µl of the sample for the analysis item A, the sampling probe is moved upward and the arm rotation center position 6 is returned to the original position, followed by dispensing the sucked sample into a reaction cell (a). The reaction disk 2 is rotated through one turn and the angular distance corresponding to one reaction cell, and then stopped. Subsequently, a reagent dispensing mechanism 17 sucks a reagent for the analysis item A from a reagent bottle 8 and adds the sucked reagent into the reaction cell (a). Likewise, 3 µl of the sample (1) and a reagent B (contained in a reagent bottle 9) are dispensed into a reaction cell (b), and 4 µl of the sample (1) and a reagent C (contained in a reagent bottle 10) are dispensed into a reaction cell (c). Reaction processes in those reaction cells are successively measured. Further, the sampling probe dispenses 40 µl of the sample (1) in an undiluted state into a reaction cell (d).

The sample dispensed into the reaction cell (d) serves as a stocked sample for re-measurement, which is prepared in advance in anticipation of the case that the re-measurement is required based on the analysis result.

Next, 20 µl of a sample (2) is dispensed into a reaction cell (e) from a sample cup 19. The reagent dispensing mechanism 17 sucks 80 µl of a diluent from a diluent bottle 21 and adds the sucked diluent into the reaction cell (e). This means that 100 µl of the 5-time diluted sample (2) is present in the reaction cell (e). Further, 5 µl of the sample (2) in an undiluted state and the reagent A are mixed in a reaction cell (f). A reaction process in the reaction cell (f) is then measured.

Subsequently, the sampling probe is inserted in the reaction cell (e) to suck 4 µl of the diluted sample (2), and dispenses the sucked sample into a reaction cell (g). This operation can be performed by setting the arm rotation center position 6 to the original position, and rotating the arm 5. Transferring (re-dispensing) 4 µl of the 5-time diluted sample (2) in the reaction cell (e) into the reaction cell (g) is equivalent to that 0.8 µl of the sample (2) in an undiluted state is dispensed into the reaction cell (g). That process is adapted for reducing the amount of the dispensed sample.

As long as the diluted sample remains in the reaction cell (e), dispensing of the diluted sample can be continued to perform various analysis items in the primary analysis, and the remaining diluted sample can be used for re-measurement.

Comparing the case of stocking the sample in the undiluted state like the sample (1), stocking the sample in the diluted state is more advantageous in that the amount of sample wasted can be reduced and the number of reaction cells used can also be reduced. When analysis requires a sample having a concentration comparable to the undiluted sample, the analysis can be performed by increasing the amount of the diluted sample to be re-dispensed.

The reaction cell for which the reaction time has lapsed is sent to a reaction-cell washing mechanism 16 where the reaction cell is washed by repeating the steps of pouring and sucking water for washing while sucking nozzles 11, 13 and 15 and washing nozzles 12, 14 are alternately inserted into the reaction cell. The reaction cell having finished the washing is used again for new analysis. Because the reaction-cell washing nozzles and the sampling probe are arranged such that they possibly physically collide with each other, a region in which the sampling arm is rotatable is restricted so as to avoid the collision between them.

Collision between the reagent dispensing mechanism 17 and the sampling probe can be avoided by shifting the timings from each other at which they come to a position above the relevant reaction cell.

When an alarm is issued from the analysis results (regardless of whether the analysis results of all items for the relevant sample have been obtained), re-measurement is performed. The sample is sucked again from the reaction cell stocking the relevant sample in the undiluted or diluted state for the re-measurement and is dispensed into a new reaction cell in the position indicated by (c) in Fig. 1. After adding the reagent, that reaction cell is moved along a re-measurement route. That operation can be realized because the sampling probe is movable above a row of the reaction cells arranged along the circumference with a turn of the sampling arm and is able to suck the sample stocked in the reaction cell at any of all the positions except for those indicated by (d), (e) and (f) where the reaction-cell washing nozzles are arranged.

In the above-described embodiment, the rotation center position 6 of the sampling arm 5 is located, by way of example, exactly at or near the center of the reaction disk 2. As a modification, however, a driving mechanism for moving the sampling probe may operate with three-axis driving in XYZ directions such that a sample can be sucked and dispensed from a desired reaction cell at any position. In such a case, though not shown, by providing a sample nozzle support mechanism inside the reaction disk, it is easier to make access to any of the reaction cells on the reaction disk (than the case of providing the support mechanism outside the reaction disk). Further, a sample dispensing mechanism capable of freely moving a dispensing nozzle in the XYZ directions may be used instead of the swing-type sampling arm. Additionally, it is needless to say that the above description is made as radially moving the rotation center position of the sampling arm (to the shift position 7), the mechanism may be designed to extend or contract only the arm instead of moving the arm rotation center position.

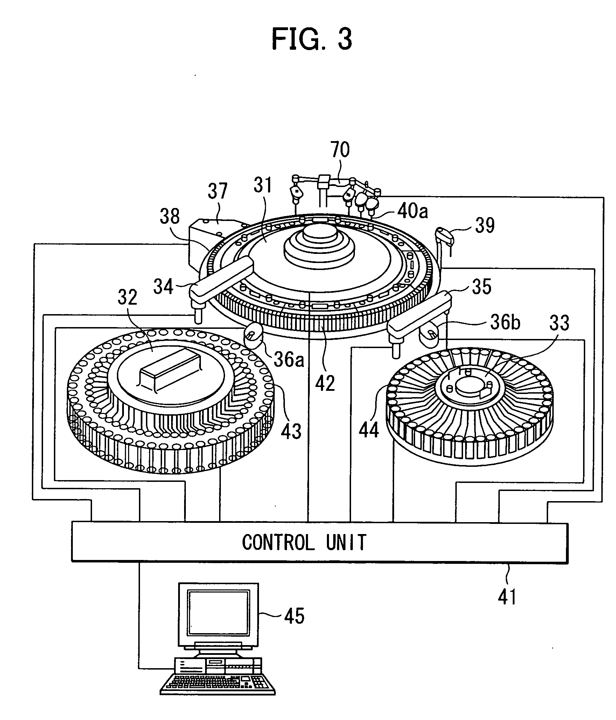

For comparison, Fig. 3 shows a known automatic analyzer to which the present invention is applied, and in which the support mechanism for the sample dispensing nozzle is installed outside the reaction disk. The construction of the automatic analyzer shown in Fig. 3 is basically the same as that in the present invention except that the support mechanism for the sample dispensing nozzle is installed outside the reaction disk. The automatic analyzer comprises primarily three mechanisms, i.e., a sample disk 32, a reaction disk 31, and a reagent disk 33.

Prior to the start of analysis process, several samples are placed on the sample disk beforehand. When the analysis process is started, a predetermined amount of each sample is sucked and ejected by a sample dispensing mechanism 34 into a reaction cell 42 at a predetermined position'on the reaction disk.

Layout of the various mechanisms in operation near the reaction disk 31 is shown in Fig. 3. A lamp serving as a light source for measuring the absorbance of a sample is disposed inside the reaction disk, and a photometer unit 37 is installed outside the reaction disk. Each time when a reaction cell 42 on the reaction disk passes an optical axis between the light source and the photometer, the absorbance of the sample in the reaction cell is measured. The measurement of the absorbance is started after the reaction disk has started rotation and has been accelerated until reaching a certain speed. The reaction disk repeats a rotation over a certain angular distance and a stop in each cycle, while the measurement is performed repeatedly after the lapse of each predetermined reaction time.

The above-mentioned mechanisms are controlled primarily by a computer unit, i.e., a control unit 41. An operating computer 45 for handling sample information and reagent management information and accepting analysis requests is connected to the control unit 41 for coordinated operation.

## Claims

1. An automatic analyzer comprising:
a reaction disk holding a plurality of reaction cells arranged in a row along the circumference of said reaction disk; and
a sample dispensing mechanism for dispensing samples into the reaction cells on said reaction disk,
wherein said sample dispensing mechanism comprises a dispensing nozzle for dispensing the samples and a support mechanism for supporting said dispensing nozzle, and said support mechanism is disposed inside the circumference of said reaction disk along which the reaction cells are arranged in a row.

2. An automatic analyzer according to Claim 1, wherein said support mechanism is a mechanism for rotating said dispensing nozzle about one point as a center, and the center point is positioned inside the circumference of said reaction disk along which the reaction cells are arranged in a row.

3. An automatic analyzer according to Claim 2, wherein said support mechanism includes an extendable moving mechanism for moving said dispensing nozzle in the radial direction in addition to the rotation of said dispensing nozzle.

4. An automatic analyzer according to Claim 1, wherein said support mechanism includes a moving mechanism movable inside the circumference of said reaction disk along which the reaction cells are arranged in a row.

5. An automatic analyzer according to Claim 3, wherein a center position of the rotating mechanism of said support mechanism is fixedly disposed near the center of said reaction disk.

6. An automatic analyzer comprising:
a reaction disk holding a plurality of reaction cells arranged in a row along the circumference of said reaction disk;
a reagent dispensing mechanism for dispensing reagents into said reaction cells on said reaction disk;
a sample dispensing mechanism for dispensing samples into the reaction cells on said reaction disk; and
an analyzing mechanism for analyzing reactions occurred in said reaction cells on said reaction disk,
wherein said sample dispensing mechanism comprises a dispensing nozzle for dispensing the samples and a support mechanism for supporting said dispensing nozzle, and said support mechanism is disposed inside the circumference of said reaction disk along which the reaction cells are arranged in a row.
